# EUROPÄISCHE PATENTANMELDUNG

(11) **EP 4 299 411 A1**
(43) Veröffentlichungstag der Anmeldung: **03.01.2024**
(21) Anmeldenummer: 22181954.3
(22) Anmeldetag: 29.06.2022
(51) Int. Cl.: B61L 23/04, B61L 29/04

(54) **VERFAHREN UND VORRICHTUNG ZUM ERKENNEN VON HINDERNISSEN IN EINEM GEFAHRENRAUM**

(71) Anmelder: Siemens Mobility GmbH, 81739 München (DE)
(72) Erfinder: Braband, Jens, 38106 Braunschweig (DE)
(74) Vertreter: Siemens Patent Attorneys

(57) **Zusammenfassung**

Gegenstand der Erfindung ist ein Verfahren zum Erkennen von Hindernissen (HD1 ... HD2) in einem Gefahrenraum (GFR), der von einem Fahrzeug befahrbar ist. Eine Sensoreinrichtung erfasst in oder an dem Gefahrenraum (GFR) liegende Objekte (OB1... OB7) . Die erfassten Objekte (OB1 ... OB7) werden rechnergestützt erkannt und zur Erkennung von Hindernissen (HD1 ... HD2) rechnergestützt bewertet. Für das Bewerten der Objekte (OB1 ... OB7) wird ein Muster des Gefahrenraumes (GFR) mit den zu erkennenden Objekten (OB1 ... OB7) verwendet, das eine Vielzahl von zu erkennenden Objekten (OB1 ... OB7) und deren Position in oder an dem Gefahrenraum (GFR) enthält. Für die erkannten Objekte (OB1 ... OB7) wird anhand des Musters geprüft, ob diese an der erwarteten Position erkannt wurden, solange, bis entweder allen Objekten (OB1 ... OB7) des Musters ein erkanntes Objekt (OB1 ... OB7) zugeordnet wurde, und die Bewertung auslöst wird, dass sich kein Hindernis (HD1 ... HD2) im Gefahrenraum (GFR) befindet, oder ein Objekt (OB1 ... OB7) in dem Muster enthalten ist, dem keines der erkannten Objekte (OB1 ... OB7) zugeordnet wurde, und die Bewertung auslöst wird, dass sich ein Hindernis (HD1 ... HD2) im Gefahrenraum (GFR) befindet. Das Bewerten der Objekte wird dann ausgesetzt, solange der Gefahrenraum (GFR) durch das Fahrzeug (FZ) befahren wird. Ferner betrifft die Erfindung eine Anordnung zur Erkennung von Hindernissen, einen Bahnübergang, einen Bahnsteig, ein Computerprogrammprodukt sowie eine Bereitstellungsvorrichtung.

## Beschreibung

Die Erfindung betrifft ein Verfahren zum Erkennen von Hindernissen in einem Gefahrenraum, der von einem Fahrzeug befahrbar ist. Außerdem betrifft die Erfindung eine Anordnung zur Erkennung von Hindernissen. Weiterhin betrifft die Erfindung einen Bahnübergang, welcher eine Anordnung zur Erkennung von Hindernissen aufweist. Ferner betrifft die Erfindung einen Bahnsteig, welcher eine Anordnung zur Erkennung von Hindernissen aufweist. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Gefahrenräume können beispielsweise durch Bahnübergänge oder Bahnsteige gebildet sein. Der Gefahrenaum ist dabei der Gleisbereich, der bei Durchfahrt eines Fahrzeugs, also dem Zug, frei von Hindernissen sein muss. Bahnübergänge mit (Voll-)Schranken werden vom Personal oder mit verhältnismäßig teuren) Radarscannern überwacht, die eine Sicherheitszulassung (Sicherheitsstufe SIL-3) benötigen. Bei einfacheren Betriebsverhältnissen sind auch Lösungen wie zeitgesteuertes Schließen nach Warnhinweis (Anrufschranke nach DB RIL 456.0001) zulässig. Auch bei der Überwachung von Bahnsteigen z. B. bei der VAG Nürnberg werden sehr aufwändige Lösungen mit Radarscannern eingestetzt.

In der Automobilindustrie gibt es weit verbreitete Algorithmen zur Hinderniserkennung, die aber in der offenen Straßenumgebung noch nicht zum Einsatz kommen, da in der Vergangenheit bereits Fälle von Versagen mit Unfallfolge bekannt geworden sind. Grundsätzlich erfolgt die Erkennung von Hindernissen dadurch, dass mittels einer geeigneten Sensorik (optische Sensoren, Radar, Ultraschall) Objekte im vor dem Fahrzeug liegenden Bereich als solche erkannt werden und rechnergestützt vorzugsweise durch Nutzung von künstlicher Intelligenz klassifiziert werden. Das Ergebnis der Klassifikation ist die Erkennung derjenigen Objekte, die als Hindernis zu werten sind. Ein Hindernis ist in diesem Zusammenhang ein Objekt, mit dem eine Kollision mit dem betreffenden Fahrzeug droht.

Andererseits können auch Objekte erkannt werden, die beispielsweise außerhalb des Fahrweges des Fahrzeuges stehen, weswegen keine Kollision droht. Diese werden auch nicht als Hindernis klassifiziert. Insbesondere bei Bahnstrecken gibt es eine Vielzahl von Objekten, die die Strecke säumen. Als Beispiele sind Signale, Weichen, Gleiselemente wie Balisen, Oberleitungen, Tunnel, Bahnhöfe und dergleichen zu nennen. Diese dürfen nicht als Hindernis klassifiziert werden, da das Fahrzeug ungehindert daran vorbeifahren kann.

AI Anwendungen werden derzeit nicht für Safety-Anwendungen (also Anwendungen auf einem hohen Sicherheitslevel) im Bahnbereich zugelassen, insbesondere, da ihre genaue Funktion nur schwer nachvollzogen werden kann und auch nicht die geforderten Entfernungen, die im Bahnbereich für eine Sensorik notwendig sind, abdeckt werden können. Sie können nur wie eine Black Box behandelt werden, die mit spezifischen Methoden überwacht werden muss. Dies ist ein besonderes Problem bei der Hinderniserkennung für das automatische Fahren auf der Schiene, die mit einer hohen Sicherheit erfolgen muss. Bei der Verwendung von AI kann nicht vorhergesehen werden, wie weit die Sensorik in der konkreten Situation Hindernisse erkennen kann und ob sie überhaupt ausreichend erkennungsfähig ist, und es ist nicht klar festzustellen, ob der Gefahrenraum auf einer Strecke frei von Hindernissen ist.

Unter künstlicher Intelligenz (im Folgenden auch mit KI abgekürzt) ist im Rahmen dieser Erfindung im engeren Sinne das rechnergestützte Machine Learning (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt und erlernt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit spezifischeren Anwendungen, zum Beispiel Regression und Klassifikation, Strukturerkennung und -vorhersage, Datengenerierung (Sampling) oder autonomes Handeln.

Beim überwachten Lernen wird das System durch den Zusammenhang von Eingabe und zugehöriger Ausgabe bekannter Daten trainiert und erlernt auf diese Weise approximativ funktionale Zusammenhänge. Dabei kommt es auf die Verfügbarkeit geeigneter und ausreichender Daten an, denn wenn das System mit ungeeigneten (z.B. nicht-repräsentativen) Daten trainiert wird, so lernt es fehlerhafte funktionale Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch für den betreffenden Anwendungsfall ist und wo Abweichungen bzw. Anomalien auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Das maschinelle Lernen kann beispielsweise durch künstliche neuronale Netze (im Folgenden für artificial neural network, kurz ANN genannt) durchgeführt werden. Künstliche neuronale Netze basieren meist auf der Vernetzung vieler Neuronen, beispielsweise McCulloch-Pitts-Neuronen oder leichter Abwandlungen davon. Grundsätzlich können auch andere künstliche Neuronen Anwendung in ANN finden, z. B. das High-Order-Neuron. Die Topologie eines Netzes (die Zuordnung von Verbindungen zu Knoten) muss abhängig von seiner Aufgabe bestimmt werden. Nach der Konstruktion eines Netzes folgt die Trainingsphase, in der das Netz "lernt". Dabei kann ein Netz beispielsweise durch folgende Methoden lernen:
- Entwicklung neuer Verbindungen
- Löschen existierender Verbindungen
- Ändern der Gewichtung (der Gewichte von Neuron j zu Neuron i)
- Anpassen der Schwellenwerte der Neuronen, sofern diese Schwellwerte besitzen
- Hinzufügen oder Löschen von Neuronen
- Modifikation von Aktivierungs-, Propagierungs- oder Ausgabefunktion

Außerdem verändert sich das Lernverhalten bei Veränderung der Aktivierungsfunktion der Neuronen oder der Lernrate des Netzes. Praktisch gesehen lernt ein ANN hauptsächlich durch Modifikation der Gewichte der Neuronen. Eine Anpassung des Schwellwertes kann hierbei durch ein on-Neuron miterledigt werden. Dadurch sind ANN in der Lage, komplizierte nichtlineare Funktionen über einen Lernalgorithmus, der durch iterative oder rekursive Vorgehensweise aus vorhandenen Ein- und gewünschten Ausgangswerten alle Parameter der Funktion zu bestimmen versucht, zu erlernen. ANN sind dabei eine Realisierung des konnektionistischen Paradigmas, da die Funktion aus vielen einfachen gleichartigen Teilen besteht. Erst in ihrer Summe wird das Verhalten komplex.

Die Aufgabe der Erfindung ist, ein Verfahren zum Erkennen von Hindernissen in einem Gefahrenbereich insbesondere auf einer Strecke, die von einem Fahrzeug befahren wird, anzugeben, welche automatisch abläuft und dabei hohe Anforderungen an die Sicherheit (Safety) erfüllt. Außerdem ist es Aufgabe der Erfindung einen Bahnübergang oder einen Bahnsteig anzugeben, welches ein solches Verfahren ausführen kann. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass für das Bewerten der Objekte ein Muster des Gefahrenraumes mit den zu erkennenden Objekten verwendet wird, das eine Vielzahl von zu erkennenden Objekten und deren Position in oder an dem Gefahrenraum enthält, wobei für die erkannten Objekte anhand des Musters geprüft wird, ob diese an der erwarteten Position erkannt wurden, solange, bis entweder allen Objekte des Musters ein erkanntes Objekt zugeordnet wurde, und die Bewertung auslöst wird, dass sich kein Hindernis im Gefahrenraum befindet, oder ein Objekt in dem Muster enthalten ist, dem keines der erkannten Objekte zugeordnet wurde, und die Bewertung auslöst wird, dass sich ein Hindernis im Gefahrenraum befindet, wobei das Bewerten der Objekte ausgesetzt wird, solange der Gefahrenraum durch das Fahrzeug befahren wird.

Das erfindungsgemäße Verfahren zur Hinderniserkennung kehrt damit das bekannte Vorgehen bei der Hinderniserkennung um. Normalerweise werden die Objekte erkannt, die potenziell ein Hindernis darstellen können, wobei Gegenstand der Bewertung ist, ob diese Objekte tatsächlich ein Hindernis darstellen. Hierbei entsteht eine Unsicherheit für den Fall, dass ein Objekt nicht erkannt wird und somit auch, wenn es ein Hindernis darstellt, nicht beachtet wird. Hierin liegt ein Gefahrenpotenzial bei der Hinderniserkennung gemäß dem Stand der Technik.

Die Objekte, die gemäß dem erfindungsgemäßen Verfahren erkannt werden sollen, sind diejenigen, deren Position aufgrund des Musters des Gefahrenraumes (also einer Beschreibung des Gefahrenraumes mit den zu erkennenden Objekten, die einen Vergleich mit den bei der Messung durch die Sensoreinrichtung erfassten und erkannten Objekten ermöglichen) bekannt sind. Deswegen kann für den Fall, dass diese Objekte nicht an der zu erwartenden Position erkannt werden, darauf geschlossen werden, dass sie durch einen anderen unbekannten Gegenstand verdeckt sind. Hierbei handelt es sich voraussichtlich um ein Hindernis, weswegen die Tatsache, dass ein Objekt nicht erkannt werden kann, zur Einleitung einer Sicherheitsmaßnahme, zum Beispiel einer Notbremsung, genutzt werden kann.

Dieses Verfahren hat den Vorteil, dass ausschließlich vorher bekannte Objekte erkannt werden müssen. Dies lässt sich mit einer größeren Verfahrenssicherheit bewerkstelligen, als die Hindernisse selbst zu erkennen, deren Form und Positionierung auf oder an der Strecke erst bekannt sind, wenn diese als solche erkannt wurden. Ein weiterer Vorteil besteht darin, dass für den Fall, dass ein Objekt gemäß dem erfindungsgemäßen Verfahren zu erkennen gewesen wäre, aber nicht erkannt wurde, eine Sicherheitsmaßnahme eingeleitet wird, welche nicht erforderlich gewesen wäre. Ein Fehler bei der Erkennung der Objekte führt somit nicht zu einem Unfall, sondern zu einer grundlosen Sicherheitsmaßnahme. Die Folgen einer solchen Fehleinschätzung sind daher vorteilhaft bedeutend geringer, als wenn es zu einem Unfall kommen würde. Dies zeigt, dass das erfindungsgemäße Verfahren selbst im Fehlerfall mit einer höheren Sicherheit betrieben werden kann.

Die erfindungsgemäße Idee, die AI durch ein Muster des Gefahrenraums zu stützen, wird erfindungsgemäß für eine Streckenfreimeldung, insbesondere Gefahrenraumfreimeldung genutzt, d. h. es sollen explizit Räume innerhalb des Sicherheitsabstandes vor dem Fahrzeug identifiziert werden, in denen sich kein Hindernis befinden kann, weil alle erwartungsgemäß im Gefahrenraum vorhandenen Objekte (definiert durch das Muster) erkannt wurden.

Bei der Modellbildung für die Hinderniserkennung wird zumindest ein Teil der folgenden Annahmen berücksichtigt (hierzu im Folgenden noch mehr):
- Es gibt bekannte Objekte in der Umgebung des Gefahrenraums, deren Form bekannt ist. Das könnte z.B. ein Signal sein, oder Tafeln oder andere Marker. Diese können weitere Eigenschaften besitzen wie z. B. Farbe der Tafel, Symbole auf der Tafel, Reflexionsvermögen (für Licht oder Radarstrahlung).
- Die Objekte sind in einem Muster verzeichnet (z. B. über einen Vektor am Fußpunkt des Gefahrenraumes), vorzugsweise eindeutig relativ zum die Strecke bildenden Gleis, auf dem das Fahrzeug fährt.

- Ein oder mehrere Sensoren im oder am Gefahrenraum erfassen die Umgebung.
- Ein AI-Algorithmus erkennt die Objekte und extrahiert die gewünschten Eigenschaften der Objekte, insb. deren Umrisse, ggf. bereinigt von Überschneidungen oder Störungen
- Ein sicherer Rechner trifft daraufhin Entscheidungen, z. B. die Ansteuerung oder Anforderung einer Bremsung eines nahenden Fahrzeugs (insbesondere eines Zuges) zur Notbremsung.

Das Muster ist dadurch gekennzeichnet, dass er zu erkennenden Objekte in Relation zu ihrer Position an der Strecke im oder am Gefahrenraum abbildet bzw. beschreibt. Hierbei können unterschiedliche Formate gewählt werden.

Das Muster kann zweidimensional ausgebildet sein. Dabei kann die Ausdehnung des Gefahrenraumes an der Erdoberfläche berücksichtigt werden. Hierbei handelt es sich um eine zweidimensionale Projektion. Es kann die Ausdehnung des Musters auch dreidimensional im Muster abgebildet sein. Hierbei kann die Position der zu erkennenden Objekte auch hinsichtlich ihrer Höhe über dem Gleis definiert werden. Das dreidimensionale Muster kann insbesondere als virtuelle Realität abgebildet werden.

Als virtuelle Realität, (im Folgenden kurz VR), wird die Darstellung der Wirklichkeit (auch als physische Realität bezeichnet) in einer in Echtzeit computergenerierten, interaktiven virtuellen Umgebung bezeichnet. Wie detailliert die VR erzeugt werden muss, hängt vom individuellen Anwendungsfall ab. Im Allgemeinen wird die VR einem dreidimensionalen Raum erzeugt und bildet dessen physikalischen Eigenschaften, insbesondere Topographie, vereinfacht ab.

Voraussetzung für die Anwendung einer VR ist die Kenntnis des Ortes und der Blickrichtung des Betrachters, hier also der Sensoreinrichtung zur Erfassung der Objekte. Wird eine VR für den Schienenverkehr verwendet ergeben sich hierbei gewisse Vereinfachungen.

Vorteilhaft wird eine Lösung dargestellt, die ohne zusätzliche Sicherungstechnik auskommt (bis auf kommerzielle Sensoren und Überwachungsmechanismen) und die trotzdem eine zuverlässige Erkennung von Objekten bzw. Hindernissen ermöglicht. Dabei wird erfindungsgemäß ausgenutzt, dass es sich um stationäre Szenerien handelt, bei denen sich aber möglicherweise Umgebungsbedingungen ändern wie Wetter, Tageszeit etc. Es hat sich gezeigt, dass man mit kommerziellen Sensoren wie Kameras, Lidar, Radar usw. in Kombination mit Mustererkennung sehr zuverlässige Resultate erhält, allerdings fällt der Nachweis schwer, da z. B. Verfahren des Machine Learning (ML) z. B. Neuronale Netzwerke (NN) schwer erklärbar sind. Dies gilt insbesondere, wenn sich die Umgebungsbedingungen ändern können.

Daher müssen ML-Verfahren gestützt werden, um nachweisbare Ergebnisse zu erzielen. Daher ist erfindungsgemäß vorgesehen, dass ein fester Bereich überwacht wird, dessen "Bild" sich aber in Abhängigkeit des Umgebungszustands ändern kann. D. h. für einen festen Umgebungszustand sind die "normalen" Bilder sehr ähnlich und fremde Objekte sollten besser erkennbar sein als ohne Zusatzinformation. Insbesondere die Abwesenheit von Objekten ist erfindungsgemäß einfach zu erkennen, dadurch, dass man bekannte Objekte leichter erkennen kann, d.h. es liegt dann keine Okklusion durch Hindernisse o. ä. vor.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass als Objekte Marker erfasst werden, die eine Information für die Erfassung der Objekte tragen.

Diese Maßnahme ist insbesondere dann vorteilhaft, wenn in dem Gefahrenraum nicht genügend Objekte vorhanden sind, die zu einer lückenlosen Hinderniserkennung beitragen können. In diesem Fall können zusätzliche Marker vorgesehen werden, die als Hauptfunktion die Erfassung als Objekt haben. Dabei wird zumindest die Funktion, ein zu erfassendes Objekt zu sein, als Information in das Verfahren eingespeist. Gleichzeitig können die Verkehrszeichen auch eine Kodierung enthalten, mit der eine zusätzliche Informationen erfasst werden kann. Hierbei kann es sich beispielsweise um Ortskoordinaten handeln.

Als vorteilhaft kann sich insbesondere erweisen, spezielle Tafeln zu platzieren, zum Beispiel tief stehende Tafeln, um den Fußbereich des Gefahrraumes abzudecken. Schon bei der Projektierung kann man dies berücksichtigen, um z. B. bestimmte bodennahe Hindernisse in Gefahrenraum auszuschließen.

Gemäß einer Ausgestaltung der Erfindung ist vorgesehen, dass nach dem Auslösen der Bewertung, dass sich ein Hindernis in dem Gefahrenraum befindet, die Sensoreinrichtung das im Gefahrenraum liegende Hindernis erfasst und das erfasste Hindernis rechnergestützt erkannt wird.

Mit anderen Worten wird für den Fall, dass das Vorhandensein eines Hindernisses erkannt wurde, eine Hinderniserkennung in dem Sinne durchgeführt, wie dies gemäß dem Stand der Technik an sich bekannt ist. Im Vergleich zu dem Verfahren gemäß dem Stand der Technik ist allerdings zu diesem Zeitpunkt bereits bekannt, dass sich ein Hindernis auf der Strecke befindet. Sicherheitsmaßnahmen können daher bereits eingeleitet werden. Die Erkennung des Hindernisses als solchem, insbesondere die Erkennung der Art des Hindernisses kann allerdings zusätzliche Informationen hervorbringen, die die Entscheidung beeinflussen können, wie die Sicherheitsmaßnahme durchzuführen ist (hierauf wurde bereits eingegangen).

Gemäß einer Ausgestaltung der Erfindung ist vorgesehen, dass der Gefahrenraum eines Bahnüberganges überwacht wird.

Folgendes wird an dem Beispiel des Gefahrenraums am Bahnübergang deutlich. Die Gefahrenräume von Bahnübergängen bestehen aus den zwischen den Schranken befindlichen Bahngleisen, die durch das herannahende Fahrzeug überquert werden sollen. In diesem Bereich dürfen daher keine Hindernisse verbleiben, beispielsweise Fußgänger oder Fahrzeuge, die die Bahnstrecke queren und zwischen den Schranken eingesperrt sind.

Gemäß einer Ausgestaltung der Erfindung ist vorgesehen, dass die Sensoreinrichtung an mindestens einem Schrankenbaum oder mindestens einem Schrankenantrieb des Bahnüberganges angebracht ist und in einer Blickrichtung zum Gleis hin den Gefahrenraum überwacht.

Am Schrankenantrieb sowie der Schranke selbst werden (ausgerichtet auf den Gefahrenraum selbst bzw. die gegenüberliegende Schranke) beispielsweise eine oder mehrere Kameras installiert. Gleichzeitig werden am Schrankenbaum optisch gut erkennbare Marker aufgebracht, z. B. reflektierend, fluoreszierend, mit einer charakteristischen Form etc. Dazu können insbesondere auch Hängegitter genutzt werden, die eine bessere Abdeckung des Bereichs bringen. Bei nicht abgedeckten Gefahrenräumen kann auf der anderen Seite der betreffende Marker erkannt werden und es kann z. B. mit Methoden des Machine Learning eine Erkennung des Maklers erfolgen. Erkennen beide Seiten den Marker ausreichend gut (z. B. in Abhängigkeit von der Größe des minimalen Prüfkörpers, der erkannt werden muss), dann wird der GFR als frei gemeldet.

Gemäß einer Ausgestaltung der Erfindung ist vorgesehen, dass der Gefahrenraum eines Bahnsteigs überwacht wird.

Bei Bahnsteigen besteht die Gefahr, dass Fahrgäste oder Gegenstände wie Gepäckstücke von dem Bahnsteig auf das Gleis fallen. In diesem Fall müssen Sicherheitsmaßnahmen eingeleitet werden, beispielsweise muss ein in den Bahnhof einfahrendes Fahrzeug verlangsamt oder sogar angehalten werden.

Bei Bahnsteigen, insb. im Nahverkehr bei Metros, oder bei geringeren Sicherheitsanforderungen, kann man die Anordnung auch einseitig ausführen, z. B. Kameras nur auf der einen Seite, z. B. unterhalb des Bahnsteigs, und die Muster nur auf der anderen Seite.

Gemäß einer Ausgestaltung der Erfindung ist vorgesehen, dass die Sensoreinrichtung an oder unterhalb einer Bahnsteigkante am Bahnsteig oder dem Bahnsteig gegenüberliegend angebracht ist und in einer Blickrichtung zum Gleis hin den Gefahrenraum überwacht.

Die genannte Aufgabe wird alternativ mit dem eingangs angegebenen Anspruchsgegenstand (Anordnung) erfindungsgemäß auch dadurch gelöst, dass die Anordnung eingerichtet ist, ein Verfahren nach einem der voranstehenden Ansprüche auszuführen.

Die genannte Aufgabe wird alternativ mit dem eingangs angegebenen Anspruchsgegenstand (Bahübergang sowie Bahnsteig) erfindungsgemäß auch dadurch gelöst, dass die Anordnung eingerichtet ist, ein Verfahren nach einem der Ansprüche 1 - 6 auszuführen.

Mit der Anordnung, dem Bahnübergang und dem Bahnsteig lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für diese erfindungsgemäßen Vorrichtungen.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind. Das Computerprogrammprodukt umfasst Programmbefehle, die bei der Ausführung des Programms durch einen Computer diesen dazu veranlassen, das Verfahren oder zumindest computerimplementierte Schritte des Verfahrens durchzuführen.

Darüber hinaus wird eine Bereitstellungsvorrichtung zum Speichern und/oder Bereitstellen des Computerprogrammprodukts, insbesondere ein computerlesbares Speichermedium, auf dem das genannte Computerprogrammprodukt gespeichert ist, beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Vorrichtung als Bahnübergang mit ihren Wirkzusammenhängen schematisch,
Figur 2 ein Ausführungsbeispiel der erfindungsbemäßen Vorrichtung als Bahsteig mit ihren Wirkzusammenhängen schematisch,
Figur 3 ein Ausführungsbeispiel einer Computer-Infrastruktur der Vorrichtung gemäß Figur 1 als Blockschaltbild, wobei die einzelnen Funktionseinheiten Programmmodule ausführen, die jeweils in einem oder mehreren Prozessoren ablaufen können und wobei die Schnittstellen demgemäß softwaretechnisch oder hardwaretechnisch ausgeführt sein können,
Figur 4 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

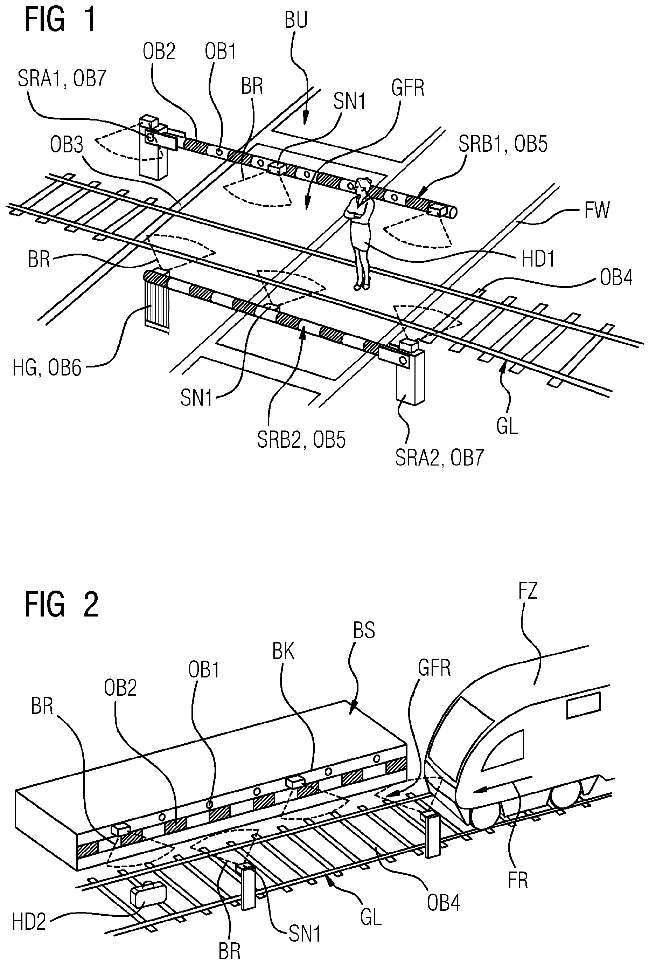

In Fig. 1 ist ein Bahnübergang BU dargestellt. Dieser weist 2 Schranken auf, die jeweils aus einem Schrankenantrieb SRA1, SRA2 und einem Schrankenbaum SRB1, SRB2 bestehen. Der Bahnübergang BU wird durch ein Gleis GL gebildet, welches einen Fahrweg FW überquert. Zwischen den Schrankenbäumen SRB1, SRB2 bildet sich daher ein Gefahrenraum GFR aus, der auf das Vorhandensein von Hindernissen HD1, im Ausführungsbeispiel gemäß Figur 1 eine Person, überprüft werden soll.

Zum Zwecke der Überprüfung sind an den Schrankenantrieben SRA1, SRA2 sowie den Schrankenbäumen SRB1, SRB2 Sensoren SN1 in Form von Kameras angebracht, die in einer Blickrichtung BR, angedeutet durch einen Aperturwinkel, auf den Gefahrenraum GFR gerichtet sind. Insbesondere können die Sensoren SN1 durch Überschneidung der Aperturwinkel ein zusammenhängendes Bild der jeweils gegenüberliegenden Schranke erzeugen.

Um den Gefahrenraum GFR auf Hindernisse HD1 zu überwachen, sieht das erfindungsgemäße Verfahren vor, dass in einem nicht dargestellten Computer (hierzu im Folgenden mehr) die Bilder ausgewertet werden. Hierbei wird ein Ansatz verfolgt, dass in den Bildern verschiedene Objekte OB1 ... OB7, die auf den Bildern erkannt werden müssen, als Muster abgespeichert sind. So kann der gesamte Bahnübergang beispielsweise als virtuelle Realität oder auch zweidimensional, beispielsweise als Anzahl gespeicherter Bilder vorliegen. Solange sich kein Hindernis HD1 im Gefahrenraum GFR befindet, müssen demnach alle Objekte OB1 ... OB7 erkannt werden und es erfolgt eine Gefahrenraumfreimeldung. Werden nicht alle Objekte OB1 ... OB7, die in dem Muster hinterlegt sind, erkannt, erfolgt eine Meldung, dass ein Hindernis im Gefahrenraum GFR festgestellt wurde.

Die Bezugszeichen OB1 ... OB7 bezeichnen bestimmte Arten von Objekten, die im Folgenden kurz erläutert werden. Bei dem Objekt OB1 handelt es sich um einen Reflektor, der insbesondere bei einer optischen Überwachung ein starkes Signal durch reflektierendes Licht bildet. Kommt als Sensor SN1 ein Radar zum Einsatz, so könnte es sich bei dem Objekt OB1 auch um einen Reflektor für Radarwellen handeln. Das Objekt OB2 ist eine farbliche Markierung auf dem Schrankenbalken SRB1, wie diese üblicherweise aufgebracht werden. Diese können auch auf einem Bild gut erkannt werden. Das Objekt OB3 ist eine farbliche Kennzeichnung auf dem Fahrweg FW, in dem Ausführungsbeispiel gemäß Figur 1 zwischen den Schienen des Gleises GL. Auch diese lassen sich gut überwachen, um insbesondere kleine Hindernisse zu erkennen, da die Hindernisse einen Teil des durch den Fahrweg FW gebildeten Untergrundes abdecken. Bei Objekt OB4 handelt es sich um die Schienenschwellen. Diese können insbesondere im Randbereich des Bahnübergangs, also vor und hinter dem Fahrweg FW optisch überwacht werden. Auch der Schrankenbaum SRB1 bildet ein Objekt OB5, welches auf dem Bild erkennbar wird. Ein Hängegitter HG, das von den Schrankenbäumen SRB1, SRB2 herabhängen kann, ist als Objekt OB6 zu erfassen und in Figur 1 nur angedeutet. Zuletzt ergibt auch der Schrankenantrieb SRA1 ein Objekt OB7, welches nicht verdeckt werden darf.

Es zeigt sich, dass sowohl Elemente des Bahnübergangs, die konstruktiv vorgesehen werden müssen, wie Schrankenantriebe SRA1, SRA2, Schienenschwellen usw. in dem Muster Verwendung finden, wie auch spezielle Markierungen OB1, OB2, OB3, die extra für eine Bilderkennung im Bahnübergang vorgesehen werden und insofern als Marker zum Einsatz kommen.

In Figur 2 ist ein Bahnsteig gezeigt, an dessen Bahnsteigkante BK zum Gleis GL hin ein Gefahrenraum GFR entsteht. Um diesen zu überwachen, wird eine ähnliche Anordnung aufgebaut wie in Figur 1 beschrieben. Damit bei dem Herannahen eines Fahrzeugs FZ in Fahrtrichtung FR keine Hindernisse HD2 (in Figur 2 ein Gepäckstück) vorhanden sind, wird mittels der Sensoren SN1, die jeweils in einer Blickrichtung von der Bahnsteigkante BK weg bzw. zu der Bahnsteigkante BK hin ausgerichtet sind, überprüft. Dabei werden ähnliche Objekte OB1 als Reflektoren, OB2 als farbliche Markierungen, OB4 als Schienenschwellen usw. in einem Muster abgespeichert und deren Vorhandensein in den Sensorergebnissen überprüft.

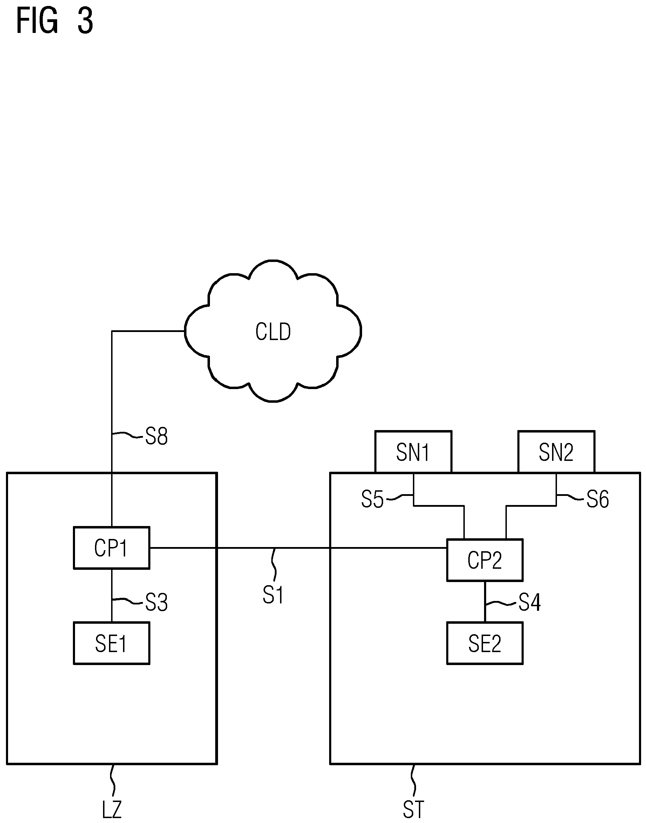

In Figur 3 ist eine Computerinfrastruktur dargestellt, die zur Durchführung des erfindungsgemäßen Verfahrens geeignet ist. Programmmodule können hierbei durch einen ersten Computer CP1 in der Leitzentrale LZ, durch einen zweiten Computer CP2 im einer Steuerung ST für den Bahnübergang BU oder für einen Bahnsteig BS und innerhalb einer Cloud CLD abgearbeitet werden.

Die Leitzentrale LZ besitzt einen ersten Computer CP1, der über eine dritte Schnittstelle S3 mit einer ersten Speichereinrichtung SE1 verbunden ist. Außerdem ist der erste Computer CP1 über eine achte Schnittstelle S8 mit der Cloud CLD verbunden. Außerdem ist der erste Computer CP1 über eine erste Schnittstelle S1 mit einem zweiten Computer CP2 der Steuerung ST verbunden.

Der zweite Computer CP2 weist eine vierte Schnittstelle S4 zu einer zweiten Speichereinrichtung SE2 auf. Das die Steuerung weist außerdem einen ersten Sensor SN1, beispielsweise eine Kamera, und einen optional einen zweiten Sensor SN2, beispielsweise ein Radar, auf. Die Sensordaten des ersten Sensors SN1 werden über eine fünfte Schnittstelle S5 und die Sensordaten des zweiten Sensors SN2 über eine sechste Schnittstelle S6 an den zweiten Computer CP2 übertragen.

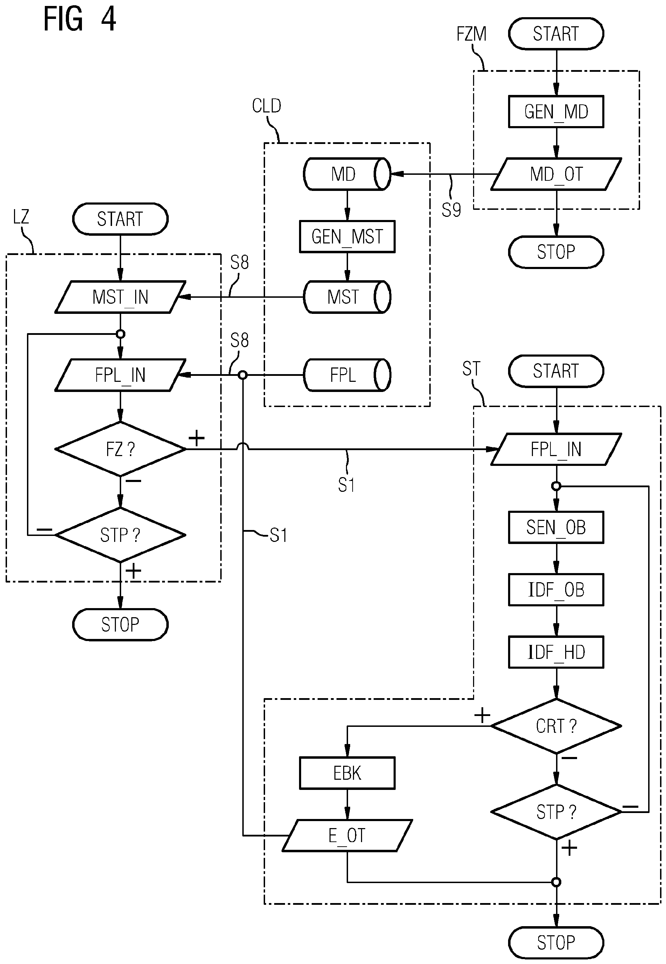

Figur 4 zeigt ein Ausführungsbeispiel für einen Verfahrensablauf des erfindungsgemäßen Verfahrens, ergänzt um einige vorbereitende Abläufe. Dargestellt ist die Cloud CLD, die einen Dienst zur Erstellung eines Musters zur Verfügung stellt. Zu diesem Zweck wird durch ein Messdienstleister FZM eine Vermessung und gegebenenfalls eine Markierung (vgl. Figuren 1 und 2) des Gefahrenraumes durchgeführt, die nach einem Start des Verfahrens in einem Erzeugungsschritt für Musterdaten GEN_MD Musterdaten erzeugt, bei denen es sich beispielsweise um die digitalen Bilder von dem Gefahrenraum handelt. Diese können in einem Ausgabeschritt für Musterdaten MD_OT über eine Schnittstelle S9 an die Cloud CLD übertragen werden und dort gespeichert werden. An die Cloud CLD ist weiterhin ein nicht näher dargestellter Dienstleister angeschlossen, welcher in einem Erzeugungsschritt für den das Muster GEN_MST ein Muster MST erstellt. Dieses kann insbesondere aus einer virtuellen Realität VR bestehen, also einer dreidimensionalen Darstellung des Umfelds des Gefahrenraumes. Alternativ ist es möglich, eine zweidimensionale Darstellung zu wählen. Das Muster MST wird in der Cloud CLD abgespeichert.

Nachdem in der Leitzentrale LZ das Verfahren gestartet wurde, wird das Muster MST über die achte Schnittstelle S8 in einem Eingabeschritt für das Muster MST_IN zur Verfügung gestellt. Außerdem wird in einem Eingabeschritt für den Fahrplan FPL_IN ebenfalls über die achte Schnittstelle S8 aus der Cloud CLD ein Fahrplan FPL für Fahrzeuge geladen.

In einem darauffolgenden Abfrageschritt FZ? wird geklärt, ob sich ein Fahrzeug im Einsatz befindet. Ist dies nicht der Fall, wird in einem Abfrageschritt für das Verfahrensende STP? abgefragt, ob das Betriebsverfahren in der Leitzentrale LZ beendet werden soll. Ist dies der Fall, wird das Verfahren gestoppt. Ist dies nicht der Fall, so wird in einem weiteren Eingabeschritt FPL_IN eine Erneuerung der Fahrplandaten vorgenommen und das Verfahren beginnt von Neuem.

Wenn das Fahrzeug FZ gestartet wurde, führt der Abfrageschritt FZ? dazu, dass der Leitzentrale LZ bestätigt wird, dass ein Fahrzeug im Einsatz ist, sodass das Muster über die erste Schnittstelle S1 in einem Eingabeschritt für den Fahrplan FPL_IN eingelesen werden kann. Anschließend erfolgt im Fahrzeug ein Erfassungsschritt für Objekte SEN_OB, bei dem Sensordaten zur Erkennung von Objekten erzeugt werden. In einem nachfolgenden Erkennungsschritt für Objekte IDF_OB werden die Sensordaten dahingehend verarbeitet, dass in oder an dem Gefahrenraum liegende Objekte OB erkannt werden.

In einem nachfolgenden Erkennungsschritt für Hindernisse IDF_HD wird ein Abgleich der im vorhergehendem Erkennungsschritt für Objekte IDF_OB gefundenen Objekte mit den aufgrund einer Auswertung des Musters zu erwartenden Objekten durchgeführt. Ein Hindernis wird identifiziert, wenn ein Objekt, dessen Erkennung aufgrund der Kenntnis des Musters zu erwarten wäre, im Blickfeld BF des Sensors SN1 ... SN2 nicht erkannt werden kann.

Wurde ein Hindernis erkannt, wird in einem Abfrageschritt für kritische Hindernisse CRT? geprüft, ob das Hindernis ein Problem für das herannahende Fahrzeug darstellt. Dies ist insbesondere der Fall, wenn es eine bestimmte Größe überschreitet. Ist das Hindernis nicht kritisch, wird in einem Abfrageschritt für das Verfahrensende ermittelt, ob der Betrieb des Fahrzeugs FZ beendet wurde. Ist dies der Fall, wird das Verfahren gestoppt. Ist dies nicht der Fall, beginnt der geschilderte Verfahrensablauf mit dem Erfassungsschritt für Objekte SEN_OB von neuem.

Handelt es sich um ein kritisches Hindernis, wird in einem nächsten Schritt eine Notbremsung EBK beim herannahenden Fahrzeug ausgelöst. Dies kann in nicht dargestellter Weise auch durch die Leitzentrale LZ und nicht durch die Steuerung ST übernommen werden. Anschließend erfolgt in einem Ausgabeschritt für den Notfall E_OT über die erste Schnittstelle S1 eine Mitteilung an die Leitzentrale LZ, die daraufhin eine entsprechende Fahrplanänderung vornimmt (in Figur 5 nur angedeutet). In jedem Falle wird auch nach der Notbremsung EBK das Verfahren der Steuerung gestoppt.

### Bezugszeichenliste

- LZ: Leitzentrale
- BU: Bahnübergang
- BS: Bahnsteig
- GFR: Gefahrenraum
- FZ: Fahrzeug
- FZM: Messdienstleister
- FR: Fahrtrichtung
- BR: Blickrichtung
- GL: Gleis
- FW: Fahrweg
- HD1 ... HD2: Hindernis
- OB1 ... OB7: Objekt
- MST: Muster
- SRB1 ... SRB2: Schrankenbaum
- SRA1 ... SRA2: Schankenantrieb
- HG: Hängegitter
- BK: Bahnsteigkante

- CP1 ... CP2: Computer
- SE1 ... SE2: Speichereinrichtung
- SN1 ... SN2: Sensor
- S1 ... S: Schnittstelle
- CLD: Cloud
- GPS: Ortungsmodul

- MST: Muster
- MD: Musterdaten
- GEN_MD: Erzeugungsschritt für Musterdaten
- MD_OT: Ausgabeschritt für Musterdaten
- MST_MST: Erzeugungsschritt für Muster
- MST_IN: Eingabeschritt für Muster
- FPL_IN: Eingabeschritt für Fahrplan
- SEN_OB: Erfassungsschritt für Objekte
- IDF_OB: Erkennungsschritt für Objekte
- IDF_HD: Erkennungsschritt für Hindernisse
- CRT?: Abfrageschritt für kritisches Hindernis
- EBK: Notbremsung
- STP?: Abfrageschritt für Verfahrensende
- FZ?: Abfrageschritt für Fahrzeug im Einsatz
- E_OT: Ausgabeschritt für Notfall

## Patentansprüche

1. Verfahren zum Erkennen von Hindernissen (HD1 ... HD2) in einem Gefahrenraum (GFR), der von einem Fahrzeug (FZ) befahrbar ist, bei dem
• eine Sensoreinrichtung in oder an dem Gefahrenraum (GFR) liegende Objekte (OB1 ... OB7) erfasst,
• die erfassten Objekte (OB1 ... OB7) rechnergestützt erkannt werden und
• zur Erkennung von Hindernissen (HD1 ... HD2) rechnergestützt bewertet werden,
**dadurch gekennzeichnet,**
**dass** für das Bewerten der Objekte (OB1 ... OB7) ein Muster des Gefahrenraumes (GFR) mit den zu erkennenden Objekten (OB1 ... OB7) verwendet wird, das eine Vielzahl von zu erkennenden Objekten (OB1 ... OB7) und deren Position in oder an dem Gefahrenraum (GFR) enthält, wobei
• für die erkannten Objekte (OB1 ... OB7) anhand des Musters geprüft wird, ob diese an der erwarteten Position erkannt wurden,
solange, bis
• entweder allen Objekten (OB1 ... OB7) des Musters ein erkanntes Objekt (OB1 ... OB7) zugeordnet wurde, und die Bewertung auslöst wird, dass sich kein Hindernis (HD1 ... HD2) im Gefahrenraum (GFR) befindet,
• oder ein Objekt (OB1 ... OB7) in dem Muster enthalten ist, dem keines der erkannten Objekte (OB1 ... OB7) zugeordnet wurde, und die Bewertung auslöst wird, dass sich ein Hindernis (HD1 ... HD2) im Gefahrenraum (GFR) befindet,
wobei das Bewerten der Objekte ausgesetzt wird, solange der Gefahrenraum (GFR) durch das Fahrzeug (FZ) befahren wird.

2. Verfahren nach Anspruch 1,
**dadurch gekennzeichnet,**
**dass** als Objekte (OB1) Marker erfasst werden, die eine Information für die Erfassung der Objekte (OB1) tragen.

3. Verfahren nach einem der voranstehenden Ansprüche,
**dadurch gekennzeichnet,**
**dass** nach dem Auslösen der Bewertung, dass sich ein Hindernis (HD1 ... HD2) in dem Gefahrenraum (GFR) befindet,
• die Sensoreinrichtung das im Gefahrenraum (GFR) liegende Hindernis (HD1 ... HD2) erfasst,
• das erfasste Hindernis (HD1 ... HD2) rechnergestützt erkannt wird.

4. Verfahren nach einem der Ansprüche 1 bis 3,
**dadurch gekennzeichnet,**
**dass** der Gefahrenraum (GFR) eines Bahnüberganges (BU) überwacht wird.

5. Verfahren nach Anspruch 4,
**dadurch gekennzeichnet,**
**dass** die Sensoreinrichtung an mindestens einem Schrankenbaum (SRB) oder mindestens einem Schrankenantrieb (SRA) des Bahnüberganges (BU) angebracht ist und in einer Blickrichtung (BR) zum Gleis (GL) hin den Gefahrenraum (GFR) überwacht.

6. Verfahren nach einem der Ansprüche 1 bis 3,
**dadurch gekennzeichnet,**
**dass** der Gefahrenraum (GFR) eines Bahnsteigs (BS) überwacht wird.

7. Verfahren nach Anspruch 6,
**dadurch gekennzeichnet,**
**dass** die Sensoreinrichtung an oder unterhalb einer Bahnsteigkante (BK) am Bahnsteig (BS) oder dem Bahnsteig (BS) gegenüberliegend angebracht ist und in einer Blickrichtung (BR) zum Gleis (GL) hin den Gefahrenraum (GFR) überwacht.

8. Anordnung zur Erkennung von Hindernissen (HD1 ... HD2) mit
• einer Sensoreinrichtung zum Erfassen von Objekten (OB1 ... OB7) in dem Gefahrenraum (GFR),
• einem Computer (CP2) zum Erkennen der erfassten Objekte (OB1 ... OB7),
**dadurch gekennzeichnet,**
**dass** die Anordnung eingerichtet ist, ein Verfahren nach einem der voranstehenden Ansprüche auszuführen.

9. Bahnübergang (BU), welcher eine Anordnung zur Erkennung von Hindernissen (HD1 ... HD2) mit
• einer Sensoreinrichtung zum Erfassen von Objekten (OB1 ... OB7) in dem Gefahrenraum (GFR) des Bahnübergangs (BU),
• einem Computer (CP2) zum Erkennen der erfassten Objekte (OB1 ... OB7),
aufweist,
**dadurch gekennzeichnet,**
**dass** die Anordnung eingerichtet ist, ein Verfahren nach einem der Ansprüche 1 - 6 auszuführen.

10. Bahnsteig (BS), welcher eine Anordnung zur Erkennung von Hindernissen (HD1 ... HD2) mit
• einer Sensoreinrichtung zum Erfassen von Objekten (OB1 ... OB7) in dem Gefahrenraum (GFR) vor dem Bahnsteig (BS),
• einem Computer (CP2) zum Erkennen der erfassten Objekte (OB1 ... OB7),
aufweist,
**dadurch gekennzeichnet,**
**dass** die Anordnung eingerichtet ist, ein Verfahren nach einem der Ansprüche 1 - 6 auszuführen.

11. Computerprogrammprodukt mit Programmbefehlen zur Durchführung des Verfahrens nach einem der Ansprüche 1 - 7.

12. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.
